# FASCICULE DE BREVET EUROPEEN

(11) **EP 2 901 391 B1**
(45) Date de publication et mention de la délivrance du brevet: **29.08.2018**
(21) Numéro de dépôt: 13789603.1
(22) Date de dépôt: 17.09.2013
(51) Int. Cl.: G06Q 20/38, H04B 5/00, H04L 29/06, H04L 29/08, H04W 12/08, G06Q 20/32

(54) **PROCEDE DE PROTECTION DE DONNEES SENSIBLES TRANSMISES DANS UN SYSTEME NFC**
VERFAHREN ZUM SCHUTZ VON IN EINEM NFC-SYSTEM ÜBERTRAGENEN SENSIBLEN DATEN
METHOD FOR PROTECTING SENSITIVE DATA TRANSMITTED IN AN NFC SYSTEM

(30) Priorité: 28.09.2012 FR 1259170
(43) Date de publication de la demande: 05.08.2015
(73) Titulaire: Inside Secure, 13590 Meyreuil (FR)
(72) Inventeur: LERCH, Matthias, F-13240 Septemes Les Vallons (FR); ALIMI, Vincent, F-14550 Blainville Sur Orne (FR); LATGE, Bastien, F-83740 La Cadiere d'Azur (FR); VIAN, Bernard, F-13420 Gemenos (FR)
(74) Mandataire: de Roquemaurel, Bruno
(86) Numéro de dépôt international: PCT/FR2013/052127
(87) Numéro de publication internationale: WO 2014/049226

(56) Documents cités:
- EP-A1- 2 363 825
- EP-A1- 2 445 170
- WO-A1-2009/077664
- "Smart Cards; UICC - Contactless Front-end (CLF) Interface; Host Controller Interface (HCI) (Release 7); ETSI TS 102 622", ETSI STANDARD, EUROPEAN TELECOMMUNICATIONS STANDARDS INSTITUTE (ETSI), SOPHIA ANTIPOLIS CEDEX, FRANCE, vol. SCP-T, no. V7.4.0, 1 avril 2009 (2009-04-01), XP014043836,
- GSMA: "Mobile NFC technical guidelines", INTERNET CITATION, décembre 2007 (2007-12), pages 1-95, XP002558746, Extrait de l'Internet: URL:http://www.gsmworld.com/documents/gsma _nfc2_wp.pdf [extrait le 2010-01-14]

## Description

La présente invention concerne les transactions à champ proche ou NFC (Near Field Communication), et notamment les transactions réalisées entre une carte à microcircuit sans contact et un terminal NFC tel qu'un terminal mobile intégrant un composant NFC.

Les composants NFC peuvent présenter plusieurs modes de fonctionnement, à savoir un mode "lecteur" (Reader Mode), un mode "émulation de carte", et un mode "device " (appelé également mode "device-to-device" soit "dispositif à dispositif'). Dans le mode "lecteur", le composant NFC fonctionne comme un lecteur RFID conventionnel pour accéder en lecture ou écriture à une puce RFID (carte à puce ou étiquette sans contact). Dans ce mode, le composant NFC émet un champ magnétique, envoie des données par modulation de l'amplitude du champ magnétique et reçoit des données par modulation de charge et couplage inductif.

Dans le mode "émulation", décrit notamment dans le brevet EP 1 327 222 au nom de la demanderesse, le composant NFC fonctionne de façon passive à la manière d'un transpondeur. Dans le mode, le composant NFC est vu par un terminal NFC en mode lecteur et dialogue avec ce dernier comme une puce RFID. Ainsi, le composant NFC n'émet pas de champ magnétique, reçoit des données en démodulant un champ magnétique émis par l'autre lecteur et émet des données par modulation de l'impédance de son circuit d'antenne (modulation de charge).

Dans le mode "device" ou "peer-to-peer", le composant NFC doit s'apparier avec un terminal NFC se trouvant également dans le même mode de fonctionnement. Le composant et le terminal communiquent entre eux en se plaçant alternativement dans un état passif (sans émission de champ) pour recevoir des données, et dans un état actif (avec émission de champ) pour émettre des données, ou restent dans un même état passif ou actif durant une transaction.

En sus de ces trois modes de fonctionnement (d'autres modes de fonctionnement peuvent être imaginés dans le futur), un composant NFC peut mettre en oeuvre plusieurs protocoles de communication sans contact et est par exemple capable d'échanger des données suivant le protocole ISO 14443-A, le protocole ISO 14443-B, le protocole ISO 15693, etc. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un composant NFC est donc un dispositif multimode et multiprotocole. La demanderesse commercialise par exemple un tel composant NFC sous la désignation "MicroRead™".

En raison de ses capacités de communication étendues, un composant NFC est destiné à être intégré dans des dispositifs portatifs tels que les téléphones mobiles comme les téléphones "intelligents" ("smartphones"), les tablettes tactiles ou les ordinateurs portables ("notebook", "laptop"). Un tel dispositif portatif forme un système NFC également appelé "chipset NFC", c'est à dire un ensemble de puces comprenant un composant NFC et au moins un processeur hôte. On entend par "processeur hôte" tout circuit intégré comprenant un microprocesseur et/ou un microcontrôleur et qui est connecté à un port du composant NFC. De nombreux systèmes NFC comprennent plusieurs processeurs hôtes, tels que le processeur principal du dispositif dans lequel le composant NFC est embarqué, et un processeur sécurisé. Le processeur principal est généralement un processeur non sécurisé, par exemple le circuit de bande de base d'un téléphone mobile ("baseband" ou circuit de radiotéléphonie). Le processeur hôte sécurisé est par exemple le microcontrôleur présent dans une carte SIM ou UICC (Universal Integrated Circuit Card) ou un microcontrôleur présent dans le composant NFC. Les ressources du composant NFC sont donc mises à la disposition des processeurs hôtes pour leur permettre de gérer des applications sans contact.

Il est envisagé d'utiliser un tel système NFC pour conduire des transactions sécurisées telles que des transactions de paiement avec processeur sécurisé externe comportant une interface de communication NFC, comme ceux équipant les cartes de paiement sans contact. Le processeur sécurisé externe peut également être intégré dans un autre système NFC, fonctionnant alors en mode "émulation de carte".

Or le processeur principal d'un système NFC tel qu'un téléphone est non sécurisé. Il peut donc exécuter une application malveillante destinée à récupérer des informations confidentielles stockées dans un processeur sécurisé externe tel que celui d'une carte en communication selon un protocole de type NFC avec le composant NFC du système. Les données confidentielles peuvent être relatives à une carte bancaire comme son numéro d'identification de carte, sa date d'expiration, le nom de son titulaire, son code de vérification, etc. En effet, ces données confidentielles ne sont généralement pas transmises sous forme protégée (chiffrée) notamment parce que certaines de ces données comme les premiers chiffres du numéro de carte bancaire, sont utilisées pour acheminer les données de transaction au sein des réseaux bancaires. Ces données sont transmises en clair également pour des raisons de compatibilité de standards ou de versions de standard, notamment de compatibilité ascendante, ces données étant transmises sous cette forme par les premières cartes de paiement mises en service.

Pour tenter de s'affranchir de ce problème, on a proposé de mettre en place un mode de fonctionnement protégé du système NFC dans lequel toutes les informations échangées entre le processeur hôte non sécurisé du système NFC et le processeur externe, transitent par un processeur sécurisé du système NFC. Le processeur sécurisé est alors configuré pour retirer des données à transmettre au processeur hôte non sécurisé toutes les données dont la confidentialité est à préserver, ou bien chiffrer ces données de manière à ce que seules les entités autorisées puissent accéder aux données chiffrées. Si le processeur sécurisé est intégré au composant NFC qui est un composant fermé ayant un système d'exploitation spécifique, il est relativement difficile d'en extraire des données confidentielles reçues d'un processeur externe avant que celles-ci ne soient transmises au processeur sécurisé du composant NFC. Si le processeur sécurisé n'est pas intégré au composant NFC, un canal de transmission spécifique éventuellement sécurisé peut être établi entre le composant NFC et le processeur sécurisé.

Toutefois, il est prévu que ce mode de fonctionnement protégé soit activé en changeant la valeur d'un indicateur géré par le processeur hôte non sécurisé. Il en résulte qu'une application malveillante exécutée par le processeur hôte non sécurisée peut désactiver le mode protégé simplement en changeant la valeur de l'indicateur. Les données confidentielles ne sont alors plus filtrées par le processeur sécurisé et le programme malveillant peut ainsi obtenir les données confidentielles.

La demande de brevet WO 2009/077664 décrit un procédé de gestion de données applicatives dans un système NFC comprenant un contrôleur de routage configuré pour enrichir des données transmises afin de permettre au processeur destinataire des données de réaliser des actions plus complexes.

La demande de brevet EP 2 363 825 décrit un procédé de gestion d'une transaction entre un dispositif NFC et un circuit intégré sans contact. Selon ce procédé, les commandes et les réponses transmises sont encapsulées en fonction de celles-ci et du canal par lequel elles sont transmises.

Il est donc souhaitable d'augmenter la sécurité de protection de données confidentielles susceptibles d'être transmises à un système NFC soit par une carte NFC, soit par un autre système NFC en mode émulation de carte. Il est également souhaitable de protéger de telles données lorsqu'elles sont susceptibles d'être émises par un élément sécurisé dans un tel système ou vers l'extérieur de ce dernier.

Des modes de réalisation concernent un procédé de transaction entre un processeur sécurisé et un serveur de transaction, par l'intermédiaire d'un processeur non sécurisé ou d'une liaison non sécurisée de type à champ proche, connectés à un contrôleur de routage, le procédé comprenant des étapes consistant à : transmettre par le contrôleur de routage au processeur sécurisé un message de commande émis par le processeur non sécurisé ou par la liaison non sécurisée, recevoir par le contrôleur de routage, un message de réponse émis par le processeur sécurisé, et transmettre par le contrôleur de routage le message de réponse au processeur non sécurisé ou par la liaison non sécurisée. Selon un mode de réalisation, le procédé comprend des étapes consistant à : analyser le contenu du message de réponse par le contrôleur de routage pour y détecter des données d'un premier type, si des données du premier type sont détectées, générer un message modifié en supprimant ou en chiffrant dans le message de réponse, au moins une partie des données détectées, le message modifié étant transmis par le contrôleur de routage en remplacement du message de réponse.

Selon un mode de réalisation, le contrôleur de routage retransmet tous les messages de réponse reçus en analysant systématiquement leur contenu, et retransmet tous les messages de commande sans analyser leur contenu.

Selon un mode de réalisation, le procédé comprend des étapes d'analyse du message de commande par le contrôleur de routage et d'activation de l'analyse du contenu de messages de réponse si l'analyse du message de commande annonce la présence de données du premier type dans un message de réponse correspondant ultérieur.

Selon un mode de réalisation, le procédé comprend des étapes consistant à : déterminer pour chaque message de commande reçu par le contrôleur de routage, s'il annonce la présence de données du premier type dans le message de réponse correspondant, et activer ou désactiver l'analyse du contenu du message de réponse correspondant, selon que le message de commande annonce ou non la présence de données du premier type dans le message de réponse correspondant.

Selon un mode de réalisation, le contrôleur de routage modifie en chiffrant au moins une partie des données du premier type détectées dans le message de réponse, génère un message de réponse modifié en remplaçant les données détectées du premier type par les données modifiées dans le message de réponse, et transmet le message de réponse modifié au processeur non sécurisé.

Selon un mode de réalisation, la modification des données du premier type détectées dans le message de réponse, comprend des étapes de transmission des données détectées à un processeur sécurisé connecté au contrôleur de routage, de génération par le processeur sécurisé des données modifiées en chiffrant au moins une partie des données extraites, et de transmission par le processeur sécurisé des données modifiées au contrôleur de routage, le processeur non sécurisé transmettant le message de réponse modifié à un serveur intermédiaire avec un identifiant de clé permettant au serveur intermédiaire de déterminer une clé de déchiffrement, le serveur intermédiaire déchiffrant les données chiffrées dans le message de réponse modifié, et reconstituant le message de réponse d'origine en remplaçant dans le message de réponse modifié les données chiffrées par les données déchiffrées, le message de réponse reconstitué étant transmis à un serveur de transaction.

Selon un mode de réalisation, lorsque des données du premier type ont été détectées dans le message de réponse, le contrôleur de routage transmet le message de réponse à un processeur sécurisé connecté au contrôleur de routage et au processeur non sécurisé, le processeur sécurisé transmettant au processeur non sécurisé le message de réponse sous une forme chiffrée.

Selon un mode de réalisation, l'analyse du contenu de messages réalisée par le contrôleur de routage est effectuée seulement si un indicateur de mode de fonctionnement du contrôleur de routage signale que le contrôleur de routage est dans un mode non protégé.

Selon un mode de réalisation, la détection de données du premier type est effectuée sur la base de la valeur de champs étiquette contenus dans le message de réponse.

Selon un mode de réalisation, l'analyse du contenu du message de réponse comprend une étape de vérification que la longueur d'un champ de donnée du message de réponse correspond à la valeur d'un champ longueur contenu dans le message de réponse.

Selon un mode de réalisation, le contrôleur de routage comprend un circuit d'interface de communication NFC (Near Field Communication), le procédé comprenant une étape d'analyse du message de commande par le contrôleur de routage pour déterminer un protocole de transaction ou un format de données échangées entre le processeur non sécurisé et le dispositif NFC, le protocole de transaction ou le format de donnée ainsi déterminé étant utilisé pour rechercher des données du premier type dans le message de réponse.

Des modes de réalisation concernent également un processeur non sécurisé et un contrôleur de routage en communication avec un processeur sécurisé, directement ou par l'intermédiaire d'une liaison non sécurisée de type à champ proche, le contrôleur de routage étant configuré pour mettre en oeuvre le procédé précédemment défini, et en particulier pour : analyser le contenu d'un message de réponse émis par le processeur sécurisé et destiné au processeur non sécurisé ou destiné à être transmis par une liaison non sécurisée, en réponse à un message de commande transmis par le contrôleur de routage au processeur sécurisé, pour y détecter des données d'un premier type, générer un message modifié en supprimant ou en modifiant dans le message de réponse, au moins une partie des données détectées, le message modifié étant transmis par le contrôleur de routage en remplacement du message de réponse.

Selon un mode de réalisation, le processeur sécurisé est intégré dans une carte à circuit intégré comportant une interface de communication à champ proche en communication NFC avec le contrôleur de routage, ou est connecté au contrôleur de routage.

Selon un mode de réalisation, le contrôleur de routage est associé à un processeur sécurisé et est configuré pour : dans un mode de fonctionnement protégé, transmettre au processeur sécurisé tous les messages de réponse qu'il reçoit, et dans un mode de fonctionnement non protégé, transmettre au processeur sécurisé les messages de réponse contenant des données du premier type, et transmettre directement au processeur non sécurisé les messages de réponse ne contenant pas de données du premier type, le processeur sécurisé étant configuré pour chiffrer les messages reçus avant de les transmettre au processeur non sécurisé.

Selon un mode de réalisation, le contrôleur de routage est associé à un processeur sécurisé configuré pour : recevoir du contrôleur de routage des données du premier type extraites des messages reçus par le contrôleur de routage, chiffrer les données du premier type reçues, et transmettre les données chiffrées au contrôleur de routage, le contrôleur de routage étant configuré pour remplacer les données du premier type par les données chiffrées reçues dans le message de réponse, et pour transmettre le message de réponse ainsi modifié au processeur non sécurisé.

Des exemples de réalisation de l'invention seront décrits dans ce qui suit, à titre non limitatif en relation avec les figures jointes parmi lesquelles :
la figure 1 représente schématiquement un exemple de système NFC susceptible de communiquer par une liaison NFC avec un processeur externe,
les figures 2 à 4 représentent schématiquement un système NFC en communication selon un protocole de type NFC avec un processeur externe , selon divers modes de réalisation,
la figure 5 représente schématiquement le système NFC en communication avec un serveur distant par l'intermédiaire d'une autre liaison de communication qu'une liaison NFC, selon un autre mode de réalisation,
la figure 6 représente le système NFC en communication selon un protocole de type NFC avec un terminal NFC, selon un autre mode de réalisation,
la figure 7 représente des étapes exécutées par le système NFC en communication avec un processeur externe.

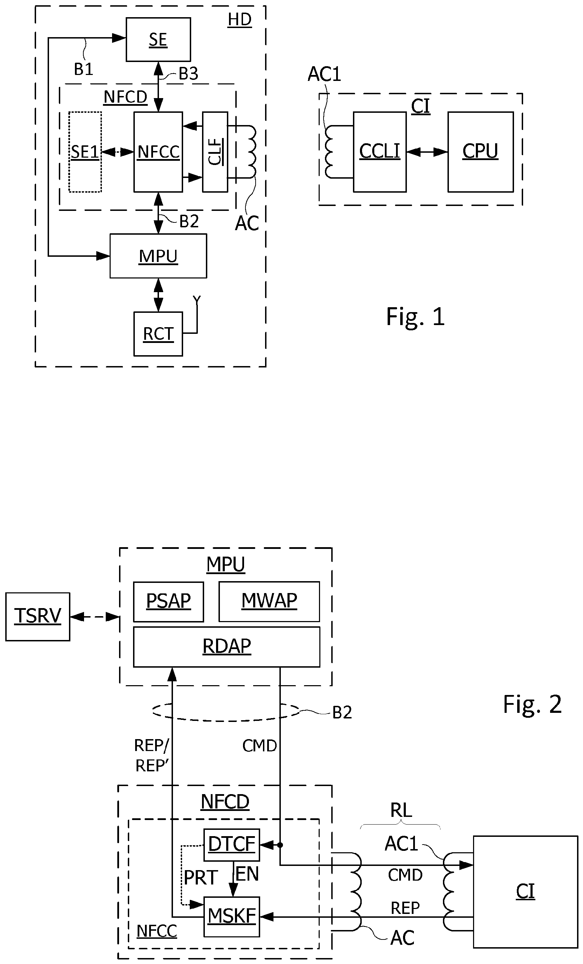

La figure 1 représente un exemple de système NFC en communication NFC avec un processeur externe. Le système comprend un processeur hôte MPU, un élément sécurisé SE, et un composant NFC, référencé NFCD. Le processeur MPU peut se connecter à des serveurs distants avec l'intermédiaire de circuits de communication RCT. Le processeur MPU et l'élément sécurisé SE peuvent être intégrés dans un appareil portatif HD tel qu'un téléphone mobile, ou un ordinateur portable de bureau ou une tablette tactile. Le composant NFCD est configuré pour conduire des transactions à champ proche avec un dispositif NFC externe, tel qu'une carte à circuit intégré référencé CI.

Le processeur MPU peut être le processeur principal ou le processeur en charge de la gestion des communications de l'appareil HD avec un ou plusieurs réseaux de communication sans fil et/ou filaire.

Le processeur sécurisé SE peut être de type carte SIM (Subscriber Identity Module) ou plus généralement carte à circuit intégré UICC, ou encore carte micro-SD (micro Secure Digital card). L'élément SE peut être connecté au processeur MPU par une liaison B1 qui peut être de type ISO 7816 ou SWP ("Single Wire Protocol").

Le composant NFCD comprend un contrôleur NFC, référencé NFCC, assurant notamment des fonctions de routage, et un circuit d'interface de communication NFC, référencé CLF, comportant un circuit d'antenne AC. Le contrôleur NFCC peut être relié au processeur MPU par l'intermédiaire d'une liaison B2 par exemple de type UART (Universal Asynchronous Receiving Transmitting) et au processeur SE par l'intermédiaire d'une liaison B3 par exemple de type SWP (Single Wire Protocol), DCLB (Digital Contact Less Bridge) ou ISO 7816.

Le composant NFCD peut également comprendre un élément sécurisé SE1 tel qu'un processeur sécurisé, connecté au contrôleur NFCC. Le contrôleur NFCC est configuré notamment pour acheminer des données reçues du circuit CLF vers l'un des processeurs MPU et SE (et éventuellement SE1) et acheminer des données provenant de l'un des processeurs MPU et SE (ou SE1) vers le circuit CLF.

Le circuit intégré CI comprend un processeur CPU relié à un circuit d'antenne AC1 par l'intermédiaire d'un circuit d'interface NFC, référencé CCLI.

La figure 2 représente le processeur MPU en communication avec le circuit intégré externe CI par l'intermédiaire du composant NFCD et une liaison à champ proche non sécurisée RL. Le processeur MPU comprend une couche logicielle de communication RDAP configurée pour fournir des services de communication NFC avec un processeur externe par l'intermédiaire du contrôleur NFCC et du circuit d'interface CLF, et un programme applicatif PSAP utilisant les services de communication fournis par la couche RDAP. Le programme PSAP peut communiquer avec un serveur distant TSRV par exemple par l'intermédiaire des circuits RCT pour conduire une transaction entre le circuit CI et le serveur TSRV.

Selon un mode de réalisation, le contrôleur NFCC comprend une fonction DTCF de détection de commande et le cas échéant, de protocole de communication, et une fonction de masquage MSK. La fonction DTCF est agencée pour intercepter et retransmettre toutes les commandes CMD émises par le processeur MPU, à transmettre par le circuit d'interface CLF, ou simplement écouter ces commandes. La fonction DTCF est configurée pour détecter si une commande CMD émise par le processeur MPU (par un programme applicatif PSAP) peut déclencher de la part du circuit intégré une réponse contenant des données à protéger. La fonction DTCF émet un signal d'activation de filtrage EN qui est transmis à la fonction MSKF, l'état du signal EN dépendant du contenu de chaque commande CMD. Ainsi, le signal EN est à l'état actif si la commande CMD reçue par le contrôleur NFCC contient une demande de données à protéger, c'est-à-dire de données qui ne doivent pas être transmises à un programme malveillant MWAP qui serait installé dans le processeur MPU.

La fonction MSKF est configurée pour intercepter tous les messages de réponse REP reçus du circuit CI par le contrôleur NFCC, et transmettre ces messages au processeur MPU lorsque le signal EN est dans un état inactif. Lorsque le signal EN est à l'état actif, la fonction MSKF est configurée pour repérer des données à protéger dans chaque message de réponse REP reçu. Si des données à protéger sont repérées, la fonction MSKF génère un message modifié REP' correspondant au message REP mais dans lequel les données à protéger repérées sont supprimées, chiffrées ou remplacées par d'autres données. La fonction MSKF transmet ensuite le message REP ou REP' selon le cas au processeur MPU.

La fonction DTCF peut également effectuer une détection de protocole de communication ou de type de transaction, ou encore de format de données transmises, puis une transmission à la fonction MSKF de données PRT relatives au protocole ou au type de transaction ou au format de données détectés, permettant à la fonction MSKF d'effectuer le repérage des données à protéger. La fonction MSKF peut alors mettre en oeuvre différentes fonctions de repérage de données à protéger en fonction des données PRT de protocole ou de type de transaction ou de format, fournies par la fonction DTCF.

Les tableaux en annexe 1 fournissent des exemples de commandes et de réponses qui peuvent être échangées successivement entre le processeur MPU et le circuit intégré CI, lors d'une transaction de type Paypass Magstripe. Ces commandes et réponses sont définies notamment par le standard EMV (Europay, MasterCard and Visa). Conformément à ce type de transaction, le processeur MPU émet successivement les commandes suivantes :
- SELECT PPSE (Paypass Payment System Environment),
- SELECT AID (Application Identifier),
- GPO (GET PROCESSING OPTIONS),
- READ RECORD, et
- COMPUTE CRYPTOGRAPHIC CHECKSUM.

Comme illustré en Annexe 1, le circuit CI en communication NFC avec le système HD fournit une réponse à chacune de ces commandes. Le format APDU (Application Protocol Data Unit) utilisé pour ce type de transaction, spécifie un format de commandes reçues et de réponses fournies par un élément sécurisé. Selon ce format, les messages de commande CMD comprennent les champs suivants :
- CLA : Donnée de classe,
- INS : Instruction,
- P1 : Paramètre 1,
- P2 : Paramètre 2,
- Lc : Longueur du champ de donnée,
- Data : Champ de donnée, et
- Le : Longueur du message de réponse attendu (à 0 si indéterminé).

Selon le format APDU, les messages de réponse REP aux messages de commande CMD comprennent les champs suivants :
- Data : Champ de donnée,
- SW1 : Donnée d'état 1, et
- SW2 : Donnée d'état 2.

Les champs de donnée des messages de commande et de réponse peuvent être structurés conformément au format TLV (Etiquette (ou Tag) - Longueur - Valeur), un champ de valeur pouvant lui-même comprendre un ou plusieurs champs de donnée imbriqués les uns dans les autres.

En Annexe 1, la commande "SELECT PPSE" permet au processeur MPU d'indiquer au processeur CPU du circuit CI qu'il souhaite engager une transaction d'un certain type. S'il dispose d'une application compatible dédiée aux transactions de paiement, le processeur CPU répond à cette commande en fournissant une réponse contenant un identifiant d'application AID susceptible de conduire une transaction de paiement dans le circuit CI. A noter comme indiqué en Annexe 1 que la réponse à la commande "SELECT PPSE" peut comprendre quatre champs "Valeur" imbriqués les uns dans les autres. Par exemple, la valeur de l'identifiant AID "A0 00 00 00 04 10 10" fournie par le processeur CPU correspond à une application susceptible de conduire une transaction de débit - crédit de type MasterCard.

A la réception de la réponse à la commande "SELECT PPSE", et s'il possède une application dédiée, requise par le processeur CPU pour conduire la transaction de paiement, le processeur MPU émet la commande "SELECT AID" pour activer dans le processeur CPU l'application correspondant à l'identifiant AID reçu. Le processeur CPU émet en réponse un message pour confirmer que l'application référencée AID est activée.

A la suite de la réception de la réponse à la commande "SELECT AID", le processeur MPU émet la commande "GPO" ("GET PROCESSING OPTIONS"). Cette commande permet d'initier la transaction au sein de l'application AID et d'obtenir des informations sur le contexte de la transaction à effectuer avec l'application AID activée par le processeur CPU, telles que AIP (Application Interchange Profile) et AFL (Application File Locator).

A la réception de la réponse à la commande GPO, le processeur MPU émet la commande "READ RECORD". Cette commande permet d'obtenir des données de l'application relatives à la transaction, référencées dans l'AFL, comme des données relatives à une carte bancaire, si le circuit CI est celui d'une carte bancaire. Comme indiqué en annexe 1 concernant la réponse à la commande "READ RECORD", le circuit CPU transmet en clair (non chiffré), le numéro PAN (Primary Account Number), le nom du titulaire, la date d'expiration de la carte bancaire, et le code de service (à trois chiffres), c'est-à-dire toutes les informations nécessaires pour effectuer un paiement à distance.

Selon un mode de réalisation, pour éviter que de telles informations puissent être récupérées par un programme malveillant (MWAP) installé dans le processeur MPU, la fonction DTCF est configurée pour détecter, sur la base de chaque commande émise par le processeur MPU, lorsque de telles informations peuvent être envoyées par le processeur CPU en communication avec le processeur MPU. La fonction DTCF active le signal EN lorsqu'une telle détection est effectuée.

Selon un mode de réalisation, la fonction DTCF est configurée pour détecter qu'une transaction sensible telle qu'une transaction de paiement est ou va être déclenchée, par exemple en déterminant si le champ de donnée de la commande "SELECT AID" correspond à une application de transaction de paiement. Lorsque le signal EN est actif, la fonction MSKF est configurée pour analyser les réponses à la commande "READ RECORD" reçues. De telles réponses peuvent être repérées par la présence d'une étiquette de valeur "70" (en représentation hexadécimale) utilisée en entête de la réponse à cette commande (cf. Annexe 1). Une fois qu'une telle réponse est repérée, la fonction MSKF est configurée pour analyser la réponse, afin de détecter l'étiquette précédant les données à protéger. Dans l'exemple donné dans l'Annexe 1, cette étiquette vaut "56" (en représentation hexadécimale). Une fois l'étiquette "56" repérée, la fonction MSKF peut remplacer les données qui suivent (PAN, Nom du titulaire, date d'expiration, code de vérification) par d'autres données en respectant la valeur du champ longueur associé à l'étiquette "56" conformément au format TLV. La fonction MSKF peut également modifier la valeur du champ longueur associé à l'étiquette, par exemple le forcer à une valeur arbitraire telle que 1, et remplacer les données à protéger par une donnée de longueur égale à la valeur arbitraire. La fonction DTCF est configurée pour désactiver le signal EN en fin de transaction ou lorsqu'une nouvelle commande reçue ne peut entrainer la fourniture par le processeur CPU de données à protéger.

Selon un autre mode de réalisation, la fonction DTCF active ou désactive le signal EN à la réception de chaque commande CMD émise par le processeur MPU, selon que le message de réponse REP correspondant, susceptible d'être émis par le processeur CPU, peut ou non contenir des données à protéger. Ainsi, dans l'exemple fourni en Annexe 1, la fonction désactive le signal EN à la réception des messages de commande CMD de type "SELECT", "COMPUTE CRYPTOGRAPHIC CHECKSUM" et "GPO", et active ce signal à la réception des messages de commande REP de type "READ RECORD".

Il est à noter que la protection de données est ainsi assurée sans faire intervenir d'élément sécurisé situé dans le composant NFCD ou à l'extérieur de ce composant.

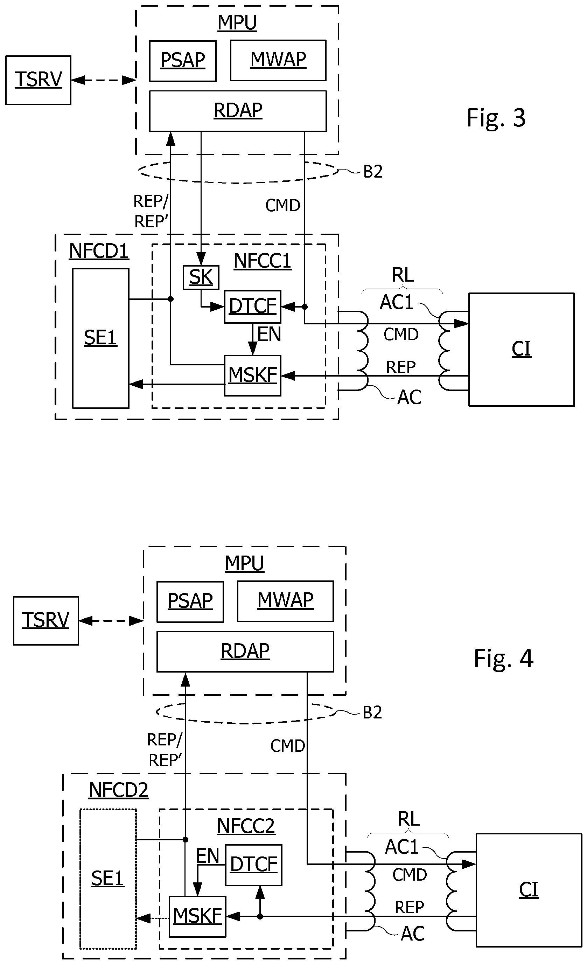

La figure 3 représente un composant NFCD1 selon un autre mode de réalisation. Le composant NFCD1 diffère du composant NFCD en ce qu'il comprend un contrôleur NFCC1 et l'élément sécurisé SE1. Le contrôleur NFCC1 peut comprendre un registre pour mémoriser un indicateur de mode de sécurité SK dont la valeur peut être modifiée par le processeur MPU. Lorsque le mode de sécurité est activé, le contrôleur NFCC1 achemine toutes les réponses reçues par son interface CLF vers l'élément sécurisé SE1 qui peut ou non les retransmettre ensuite au processeur MPU, éventuellement sous une forme modifiée, en fonction de règles prédéfinies. L'élément sécurisé SE1 peut alors mettre en oeuvre des fonctions de sécurité pour protéger la confidentialité et éventuellement l'intégrité de données reçues par l'interface CLF. Lorsque la valeur de l'indicateur SK est modifiée pour désactiver le mode de sécurité, la fonction DTCF est activée pour détecter la réception possible de données à protéger et activer la fonction MSKF (à l'aide du signal EN), afin de détecter la présence de telles données et les supprimer des messages de réponse REP' qui sont retransmis au processeur MPU.

Il est à noter que le composant NFCD (figure 2) peut également comprendre l'indicateur SK, la fonction de DTCF n'étant active que lorsque l'indicateur SK est désactivé. Lorsque cet indicateur est activé, les messages de réponse reçus par le contrôleur NFCC peuvent être transmis par un canal sécurisé établi avec l'élément sécurisé SE du système HD (par la liaison B3 indiquée sur la figure 1).

Au lieu de retirer les données à protéger des messages de réponse REP, la fonction MSKF peut transmettre à l'élément sécurisé SE1 les messages de réponse lorsque ceux-ci contiennent des données à protéger (sans que le contrôleur NFCC1 soit en mode protégé). L'élément SE1 peut alors prendre toute mesure appropriée pour protéger de telles données, comme le chiffrement de ces données à l'aide d'une clé de chiffrement connue d'un programme sécurisé qui peut être installé dans le processeur MPU ou dans un serveur distant.

La figure 4 représente un composant NFCD2 selon un autre mode de réalisation. Le composant NFCD2 comprend un contrôleur NFCC2 et optionnellement l'élément sécurisé SE1. Le contrôleur NFCC2 diffère du contrôleur NFCC de la figure 2 ou 3 en ce que la fonction DTCF accomplit sa tâche de détection non pas sur les commandes reçues du processeur MPU, mais sur les messages de réponse reçus par l'interface CLF. Les fonctions DTCF et MSKF peuvent alors être fusionnées, ou la fonction DTCF peut être supprimée. Dans l'exemple de transaction fourni en Annexe 1, la fonction DTCF peut activer le signal EN lorsque l'étiquette "70" figure dans l'entête d'un message de réponse reçu. Ce mode de réalisation convient particulièrement lorsque, compte tenu des applications installées dans les circuits CPU susceptibles d'être mis en communication avec le processeur MPU via le composant NFCD2, et des protocoles de transaction et formats de commandes et de réponses utilisés par ces applications, il n'y a pas d'ambigüité possible sur le contenu des messages de réponse REP susceptibles d'être reçus par le composant NFCD2.

Bien entendu, une telle détection uniquement dans les messages de réponse REP peut être également effectuée dans le mode de réalisation de la figure 3.

Selon un autre mode de réalisation, les fonctions DTCF et MSKF peuvent être configurées pour protéger seulement des données transmises conformément à un certain protocole de transaction ou respectant un certain format. Ainsi, dans l'exemple de transaction fourni en Annexe 1, la fonction DTCF peut activer le signal EN seulement lorsque l'étiquette "70" figure dans l'entête d'un message de réponse reçu, et la fonction MSKF peut retirer seulement les données se trouvant dans le champ associé à l'étiquette "56", avant de retransmettre le message de réponse reçu au processeur MPU.

Il peut être prévu que la fonction DTCF du contrôleur NFCC2 effectue un contrôle du format des messages de réponse REP lorsqu'elle détecte d'après les données d'entête du message que des données à protéger peuvent figurer dans le message. Ainsi, dans l'exemple de l'Annexe 1, lorsque l'étiquette "70" est détectée en entête d'un message de réponse REP, la fonction DTCF peut vérifier notamment que la valeur de la longueur du message fournie à la suite de l'étiquette correspond à la longueur du champ de donnée du message. De cette manière, la fonction DTCF peut lever certaines ambigüités en ce qui concerne le format, et le contenu du message de réponse.

Dans tous les modes de réalisation précédemment décrits, il peut être prévu d'utiliser l'indicateur SK et de tenir compte de la valeur de cet indicateur pour activer la fonction DTCF.

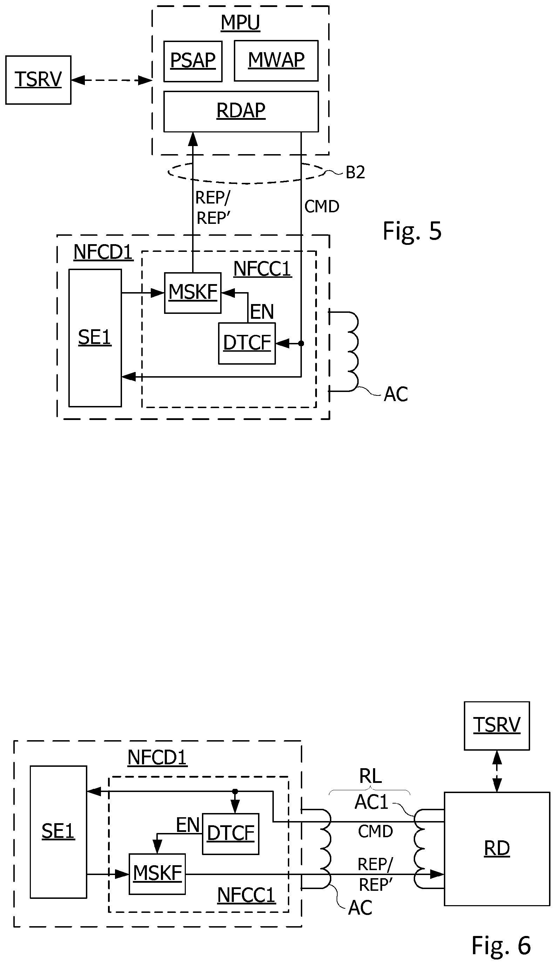

La figure 5 représente le système NFC de la figure 3 en communication avec un serveur distant TSRV par l'intermédiaire du processeur MPU (et des circuits de communication RCT). La figure 5 correspond par exemple à l'utilisation de l'élément sécurisé SE1 (au lieu du circuit CI) pour conduire une transaction avec le serveur TSRV. Ici, le composant NFCD1 peut ne pas comprendre de registre de mémorisation de l'indicateur de mode de sécurité SK.

Selon un mode de réalisation, le contrôleur NFCC1 peut activer la fonction DTCF lorsqu'une transaction est engagée par le processeur MPU avec l'élément sécurisé SE1, lorsque le mode de sécurité signalé par l'indicateur SK n'est pas activé, ou en l'absence de cet indicateur. Comme précédemment, la fonction DTCF détecte dans les messages de commande CMD transmis par le processeur MPU et destinés à l'élément SE1 si des messages de réponse REP à ces commandes peuvent contenir des données à protéger. Si tel est le cas, la fonction DTCF active la fonction MSKF qui détecte des données à protéger dans les messages de réponse fournis par l'élément SE1 et chiffre les données éventuellement détectées des messages de réponse avant de transmettre ces derniers au processeur MPU.

La figure 6 représente le système NFC de la figure 3 en communication avec un terminal NFC référencé RD. Dans ce cas, le composant NFCD fonctionne en mode émulation de carte. Dans cette configuration, il peut également être souhaitable de protéger les données confidentielles mémorisées par l'élément SE1 lorsqu'elles sont transmises par la liaison à champ proche RL qui n'est pas sécurisée. Ici encore, le contrôleur NFCC1 peut activer la fonction DTCF lorsqu'une transaction est engagée entre le terminal RD et l'élément sécurisé SE1, lorsque le mode de sécurité signalé par l'indicateur SK n'est pas activé, ou en l'absence de cet indicateur. Comme précédemment, la fonction DTCF détecte dans les messages de commande CMD transmis par le terminal RD et destinés à l'élément SE1 si des messages de réponse REP à ces commandes peuvent contenir des données à protéger. Si tel est le cas, la fonction DTCF active la fonction MSKF qui détecte des données à protéger dans les messages de réponse fournis par l'élément SE1 et chiffre les données éventuellement détectées des messages de réponse avant de transmettre ces derniers au terminal RD.

Les fonctions DTCF et MSKF peuvent être réalisées sous la forme d'une application, ou applet, qui peut être adaptée en fonction du protocole de transmission ou du format des données à traiter. Par exemple, l'ensemble des étiquettes à reconnaître dans les messages de commande et/ou les messages de réponse peut être chargé en complément de l'application.

Bien entendu, dans les modes de réalisation des figures 5 et 6, la détection de données à protéger peut être effectuée par la fonction de détection DTCF uniquement sur les messages de réponse REP.

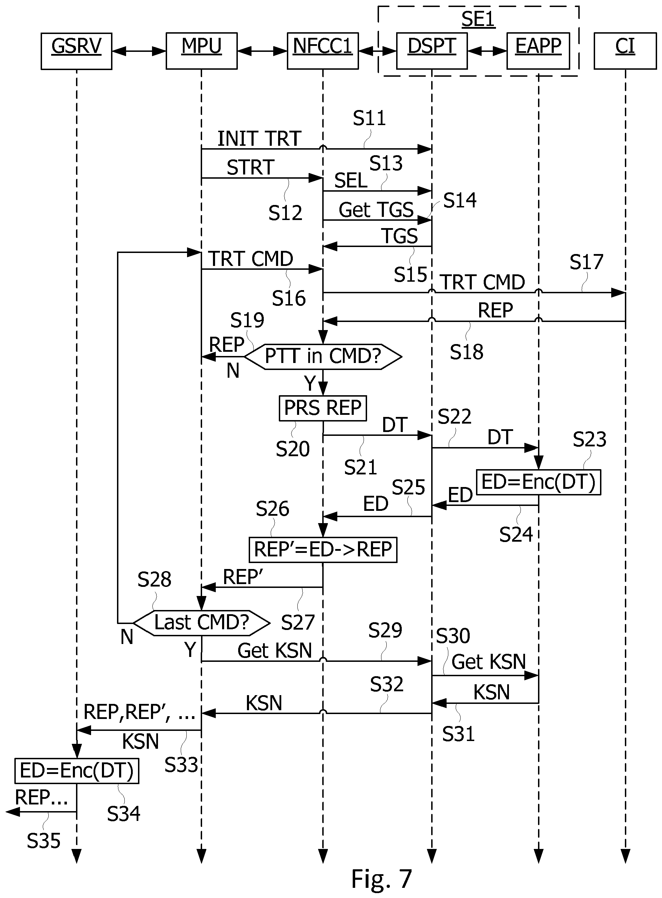

La figure 7 représente des étapes S11 à S35, exécutées par le processeur MPU, le contrôleur NFCC1 et un processeur externe en communication avec le contrôleur NFCC1 par une liaison NFC (cas des figures 2 à 5). Dans l'exemple de la figure 7, le chiffrement des données à protéger est réalisé par une application EAPP de l'élément sécurisé SE1. L'élément SE1 comprend une fonction de routage DSPT qui achemine les commandes reçues à l'application de l'élément SE1, destinatrice de la commande. A l'étape S11, le processeur MPU transmet un message de démarrage de transaction INIT TRT à l'élément SE1. A l'étape S12, le processeur MPU transmet au contrôleur NFCC1 un message STRT d'activation de la protection de données. Aux étapes S13 et S14, le contrôleur NFCC1 reçoit le message STRT et interroge l'élément SE1 pour obtenir la liste des étiquettes à utiliser pour détecter les données à protéger. A l'étape S15, l'élément SE1 transmet au contrôleur NFCC1 une liste d'étiquettes à surveiller TGS, déterminée sur la base du message INIT TRT spécifiant un type de transaction.

A l'étape S16, le processeur MPU transmet un premier message de commande CMD au contrôleur NFCC1 à destination du processeur externe CI. Le message CMD est retransmis par le contrôleur NFCC1 au processeur CI à l'étape S17. A l'étape S18, le processeur CI émet un message de réponse REP. Le message REP est reçu par le contrôleur NFCC1 qui teste la présence d'étiquettes introduisant des données à protéger dans le message REP à l'étape S19. Si aucune donnée à protégée n'est détectée, le message REP est transmis au processeur MPU sans modification, sinon le contrôleur NFCC1 exécute l'étape S20. A l'étape S20, le contrôleur NFCC1 extrait les données DT associées à chaque étiquette repérée à l'étape S19. Les données ainsi extraites DT sont transmises à l'élément sécurisé SE1 aux étapes S21 et S22. A l'étape S23, l'élément SE1 chiffre les données DT à l'aide d'une fonction de chiffrement Enc. Aux étapes S24 et S25, les données chiffrées obtenues ED sont transmises au contrôleur NFCC1. A l'étape S26, le contrôleur NFCC1 reçoit les données chiffrées ED et les insère dans le message de réponse REP en remplacement des données DT. A l'étape S27, le contrôleur NFCC1 transmet un message de réponse REP' au processeur MPU, le message REP' contenant les données ED en remplacement des données DT. A l'étape S28, le processeur détermine si le message de commande CMD est le dernier de la transaction initiée aux étapes S11, S12. Si le message CMD n'est pas le dernier de la transaction, les étapes S16 à S28 sont à nouveau exécutées avec un message de commande suivant.

Si le processeur MPU détermine que le message CMD est le dernier de la transaction, à l'étape S28, il exécute l'étape S29. A l'étape S29, le processeur MPU transmet au contrôleur NFCC1 un message de requête d'identifiant de clé de chiffrement utilisé à l'étape S23. Ce message de requête est transmis à l'élément SE1 à l'étape S30. A l'étape S31, l'élément SE1 transmet un identifiant de clé de chiffrement KSN. L'identifiant KSN peut comprendre par exemple un identifiant de l'élément SE1 et une valeur de compteur de transaction. Cet identifiant est transmis par le contrôleur NFCC1 au processeur MPU à l'étape S32. A l'étape S33, le processeur MPU transmet tous les messages de réponse REP, REP' fournis par le processeur CI, éventuellement modifiés, et l'identifiant de clé KSN à un serveur intermédiaire GSRV dédié au déchiffrement des données. Le serveur GSRV détermine à partir de l'identifiant KSN reçu une clé de déchiffrement permettant de déchiffrer les données ED contenues dans les messages modifiés REP' reçus. A l'étape S34, le serveur GSRV extrait et déchiffre les données EC dans les messages REP' modifiés, puis reconstitue les messages REP correspondants, et transmet à l'étape S35 tous les messages reçus REP et éventuellement reconstitués, à un serveur destinataire de la transaction, par exemple TSRV.

La fonction de chiffrement Enc mise en oeuvre à l'étape S23 par l'élément SE1 peut être une fonction de type FPE (Format Preserving Encryption), qui préserve le format des données. La fonction ENC peut dépendre du type de donnée à chiffrer. Ainsi, dans le cas d'un numéro de carte bancaire, composé de 16 chiffres, seule une partie des 16 chiffres peut être modifiée. Selon un exemple, les six premiers chiffres du numéro de carte sont conservés de manière à pouvoir acheminer les données de transaction vers la banque émettrice de la carte. Tout ou partie des autres chiffres de la carte peuvent être chiffrés à l'aide d'un algorithme de chiffrement adapté en utilisant une clé de chiffrement qui peut être déterminée par le serveur GSRV à partir de l'identifiant KSN. L'algorithme de chiffrement peut être AES (Advanced Encryption Standard) ou 3DES (Triple Digital Encryption Standard).

Les étapes de la figure 7 peuvent également être exécutées par les systèmes des figures 5 et 6. Dans le système de la figure 5, la transaction, et en particulier les étapes S17 et S18, est alors effectuée non pas avec un circuit intégré externe, mais avec une application de l'élément SE1. Dans le système de la figure 6, les étapes réalisées par le processeur MPU sont exécutées par le terminal RD, et les étapes réalisées par le circuit CI sont exécutées par une application de l'élément SE1.

Il apparaîtra clairement à l'homme de l'art que la présente invention est susceptible de diverses variantes de réalisation et diverses applications. En particulier, l'invention s'applique également à d'autres transactions sensibles, telles que VISA qVSDC, VISA MSD CVN17, VISA MSD Legacy, MasterCard M/Chip -Select 4, -Lite 4, -Mobile, -Flex, American Express AEIPS, Discover D-PAS, Japan Crédit Bureau (JCB), Carte Bleue (CB), Eurocheque, Maestro, etc.

Dans les transactions conformes au standard EMV, un champ de donnée "Track1 Discretionary Data" repéré par l'étiquette "9F1F" ou un champ de donnée "Track2 Equivalent Data" est transmis en réponse à une commande "READ RECORD". La fonction DTCF peut donc activer la fonction MSKF à l'émission de chaque commande "READ RECORD", et la fonction MSKF peut chercher à détecter l'étiquette "9F1F" dans les messages de réponse reçus.

Dans les transactions de type VISA qVSDC, des données à protéger (PAN, Nom du titulaire, date d'expiration, code de service, ...) sont transmises dans un champ de donnée "Track2 Equivalent Data" repéré par l'étiquette "57", ce champ étant transmis en réponse à une commande de type "GPO". La fonction DTCF peut donc activer la fonction MSKF à l'émission de chaque commande "GPO", et la fonction MSKF peut chercher à détecter la présence de l'étiquette "57" dans un message de réponse reçu. Dans l'exemple d'un système NFC susceptible de traiter des transactions de types VISA qVSDC, EMV et Paypass Magstripe, la fonction DTCF peut activer le signal EN seulement à l'émission de messages de commande "GPO" et "READ RECORD". La fonction MSKF (lorsqu'elle est activée par le signal EN) peut alors être configurée pour rechercher dans les messages de réponse REP des étiquettes ("56", "57", "9F1F") introduisant des champs de donnée de type "Track1 Discretionary Data" ou "Track2 Equivalent Data".

Par ailleurs, la présente demande couvre également toutes les combinaisons possibles des modes de réalisation précédemment décrits.

### ANNEXE 1 faisant partie intégrante de la description

### Transaction PayPass Magstripe (Track 1)

### • Commande SELECT PPSE

**Commande**

| **Valeurs** | **Commentaire** |
|---|---|
| 00 A4 | Commande=SELECT |
| 04 00 | P1 - P2 |
| 0E | Longueur= 14 |
| 32 50 41 59 2E 53 59 53 2E 44 44 46 30 31 | Valeur=Directory Name (=2PAY.SYS.DDF01) |
| 00 | Longueur réponse |

**Réponse**

| **Valeurs** | **Commentaire** | | | | |
|---|---|---|---|---|---|
| 6F | Tag=Response Message Template | | | | |
| 23 | Longueur=35 | | | | |
| 84 | Valeur | Tag=Directory Name | | | |
| 0E | | Longueur=14 | | | |
| 32 50 41 59 2E 53 59 53 2E 44 44 46 30 31 | | Valeur (="2PAY.SYS.DDF01") | | | |
| A5 | | Tag=File Control Information | | | |
| 11 | | Longueur= 17 | | | |
| BF 0C | | Valeur | Tag=Issuer Data | | |
| 0E | | | Longueur= 14 | | |
| 61 | | | Valeur | Tag=Directory Entry Length | |
| 0C | | | | Longueur= 12 | |
| 4F | | | | Valeur | Tag=AID |
| 07 | | | | | Longueur=7 |
| A0 00 00 00 04 10 10 | | | | | Valeur (=MasterCard Credit/Debit) |
| 87 | | | | | Tag=App.priority indicator |
| 01 | | | | | Longueur=1 |
| 01 | | | | | Valeur |
| 90 00 | SW1 - SW2 | | | | |

### • Commande SELECT AID

**Commande**

| **Valeurs** | **Commentaire** |
|---|---|
| 00 A4 | Commande=SELECT |
| 04 00 | P1 -P2 |
| 07 | Longueur=7 |
| A0 00 00 00 04 10 10 | Valeur=AID |
| 00 | Longueur réponse |

**Réponse**

| **Valeurs** | **Commentaire** | | |
|---|---|---|---|
| 6F | Tag=Response Message Template | | |
| 17 | Longueur=23 | | |
| 84 | Val eur | Tag=Directory Name | |
| 07 | | Longueur=7 | |
| A0 00 00 00 04 10 10 | | Valeur=AID | |
| A5 | | Tag=Issuer Template | |
| 0C | | Longueur=12 | |
| 50 | | Valeur | Tag=App. Label |
| 0A | | | Longueur |
| 4D 61 73 74 65 72 43 61 72 64 | | | Valeur="MasterCard" |
| 90 00 | SW1 - SW2 | | |

### • Commande GPO

**Commande**

| **Valeurs** | **Commentaire** |
|---|---|
| 80 A8 | Commande=GPO |
| 00 00 | P1-P2 |
| 02 | Longueur=2 |
| 83 00 | Valeur |
| 00 | Longueur réponse |

**Réponse**

| **Valeurs** | **Commentaire** | |
|---|---|---|
| 77 | Tag=Response Message Template | |
| 0A | Longueur=10 | |
| 82 | Valeur | Tag=App. Interchange Profile (AIP) |
| 02 | | Longueur=2 |
| 00 00 | | Valeur |
| 94 | | Tag=App. File Locator |
| 04 | | Longueur=4 |
| 08 01 01 00 | | Valeur |
| 90 00 | SW1 - SW2 | |

### • Commande READ RECORD

**Commande**

| **Valeurs** | **Commentaire** |
|---|---|
| 00 B2 | Commande=READ RECORD |
| 01 | P1 (Record number) |
| 0C | P2 (Reference Control Parameter) |
| 00 | Longueur réponse |

**Réponse**

| **Valeurs** | **Commentaire** | | |
|---|---|---|---|
| 70 | Tag=Record Template | | |
| 7F | Longueur=127 | | |
| 9F 6C | | Tag=App. Version Nr. | |
| 02 | | Longueur=2 | |
| 00 01 | | Valeur | |
| **56** | | **Tag=Track1 Discretionary Data** | |
| 3E | | Longueur=62 | |
| 42 | | Valeur | Format Code |
| 35 34 31 33 31 32 33 34 35 36 37 38 34 38 30 30 | | | **PAN** (=5413123456784800) |
| 5E | | | séparateur de champ |
| 53 55 50 50 4C 49 45 44 2F 4E 4F 54 | | | **Nom du titulaire** |
| 5E | | | séparateur de champ |
| 30 39 30 36 | | | **Date d'expiration (AAMM)** |
| 31 30 31 | | | **Code de service** |
| 33 33 30 30 30 33 33 33 30 30 30 32 32 32 32 32 30 30 30 31 31 31 31 30 | | | autres données |
| 9F 64 | | Tag=Track1 ATC³ Digit Nr. | |
| 01 | | Longueur=1 | |
| 03 | | Valeur | |
| 9F 62 | | Tag=Track1 BitMap for CVC3¹ | |
| 06 | | Longueur=6 | |
| 00 00 00 38 00 00 | Valeur | Valeur | |
| 9F 63 | | Tag=Track1 BitMap for UN² & ATC³ | |
| 06 | | Longueur=6 | |
| 00 00 00 00 E0 E0 | | Valeur | |
| 9F 65 | | Tag=Track2 BitMap for CVC3¹ | |
| 02 | | Longueur=2 | |
| 00 0E | | Valeur | |
| 9F 66 | | Tag=Track2 BitMap for UN² & ATC³ | |
| 02 | | Longueur=2 | |
| 0E 70 | | Valeur | |
| 9F 6B | | Tag=Track2 Data | |
| 13 | | Longueur=19 | |
| 54 13 12 34 56 78 48 00 D0 90 61 01 90 00 99 00 00 00 0F | | Valeur | |
| 9F 67 | | Tag=Track2 ATC³ Digit Nr. | |
| 01 | | Longueur=1 | |
| 03 | | Valeur | |
| 9000 | SW1 - SW2 | | |

| | | | |
|---|---|---|---|
| ¹ : Card Vérification Code 3 ² : Unpredictable Number ³ : Application Transaction Counter | | | |

### • Commande COMPUTE CRYPTOGRAPHIC CHECKSUM

**Commande**

| **Valeurs** | **Commentaire** |
|---|---|
| 80 2A | Commande=Compute Cryptographic Checksum |
| 8E | P1 |
| 80 | P2 |
| 04 | Longueur=4 |
| 00 00 08 99 | Valeur |
| 00 | Longueur réponse |

**Réponse**

| **Valeurs** | **Commentaire** | |
|---|---|---|
| 77 | Tag=Response Message Template | |
| 0F | Longueur= 15 | |
| 9F 61 | Val eur | Tag=CVC3¹ Track2 |
| 02 | | Longueur=2 |
| B8 92 | | Valeur |
| 9F 60 | | Tag=CVC3¹ Track1 |
| 02 | | Longueur=2 |
| FB C7 | | Valeur |
| 9F 36 | | Tag=App. Transaction Counter |
| 02 | | Longueur=2 |
| 00 5E | | Valeur |
| 90 00 | SW1 - SW2 | |

| | | |
|---|---|---|
| ¹ : Card Vérification Code 3 | | |

## Revendications

1. Procédé de transaction entre un processeur sécurisé (CI, SE1) et un serveur de transaction (TSRV), par l'intermédiaire d'un processeur non sécurisé (MPU) ou d'une liaison non sécurisée (RL) de type à champ proche, connectés à un contrôleur de routage (NFCC, NFCC1, NFCC2), le procédé comprenant des étapes consistant à :
transmettre par le contrôleur de routage au processeur sécurisé un message de commande (CMD) émis par le processeur non sécurisé ou par la liaison non sécurisée,
recevoir par le contrôleur de routage, un message de réponse (REP) émis par le processeur sécurisé, et
transmettre par le contrôleur de routage le message de réponse au processeur non sécurisé ou par la liaison non sécurisée,
**caractérisé en ce qu'**il comprend des étapes consistant à :
analyser le contenu du message de réponse (REP) par le contrôleur de routage NFCC, NFCC1, NFCC2) pour y détecter des données d'un premier type, et
si des données du premier type sont détectées, générer un message modifié (REP') en supprimant ou en chiffrant dans le message de réponse, au moins une partie des données détectées, le message modifié étant transmis par le contrôleur de routage en remplacement du message de réponse.

2. Procédé selon la revendication 1, dans lequel le contrôleur de routage (NFCC2) retransmet tous les messages de réponse reçus (REP) en analysant systématiquement leur contenu, et retransmet tous les messages de commande (CMD) sans analyser leur contenu.

3. Procédé selon la revendication 1, comprenant des étapes d'analyse du message de commande (CMD) par le contrôleur de routage (NFCC, NFCC1) et d'activation de l'analyse du contenu de messages de réponse (REP) si l'analyse du message de commande annonce la présence de données du premier type dans un message de réponse correspondant ultérieur.

4. Procédé selon la revendication 2 ou 3, comprenant des étapes consistant à :
déterminer pour chaque message de commande (CMD) reçu par le contrôleur de routage (NFCC, NFCC1), s'il annonce la présence de données du premier type dans le message de réponse (REP) correspondant, et
activer ou désactiver l'analyse du contenu du message de réponse correspondant, selon que le message de commande annonce ou non la présence de données du premier type dans le message de réponse correspondant.

5. Procédé selon l'une des revendications 1 à 4, dans lequel le contrôleur de routage (NFCC, NFCC1) modifie en chiffrant au moins une partie des données du premier type détectées dans le message de réponse (REP), génère un message de réponse modifié (REP') en remplaçant les données détectées du premier type par les données modifiées dans le message de réponse, et transmet le message de réponse modifié au processeur non sécurisé (MPU).

6. Procédé selon la revendication 5, dans lequel la modification des données du premier type détectées dans le message de réponse (REP), comprend des étapes de transmission des données détectées à un processeur sécurisé (SE1) connecté au contrôleur de routage (NFCC1), de génération par le processeur sécurisé des données modifiées en chiffrant au moins une partie des données extraites, et de transmission par le processeur sécurisé des données modifiées au contrôleur de routage, le processeur non sécurisé (MPU) transmettant le message de réponse modifié (REP') à un serveur intermédiaire (GSRV) avec un identifiant de clé permettant au serveur intermédiaire de déterminer une clé de déchiffrement, le serveur intermédiaire déchiffrant les données chiffrées dans le message de réponse modifié, et reconstituant le message de réponse d'origine en remplaçant dans le message de réponse modifié les données chiffrées par les données déchiffrées, le message de réponse reconstitué étant transmis à un serveur de transaction (TSRV).

7. Procédé selon l'une des revendications 1 à 4, dans lequel, lorsque des données du premier type ont été détectées dans le message de réponse (REP), le contrôleur de routage (NFCC1) transmet le message de réponse à un processeur sécurisé (SE, SE1) connecté au contrôleur de routage et au processeur non sécurisé (MPU), le processeur sécurisé transmettant au processeur non sécurisé le message de réponse sous une forme chiffrée.

8. Procédé selon l'une des revendications 1 à 7, dans lequel l'analyse du contenu de messages (CMD, REP) réalisée par le contrôleur de routage (NFCC2) est effectuée seulement si un indicateur de mode de fonctionnement (SK) du contrôleur de routage signale que le contrôleur de routage est dans un mode non protégé.

9. Procédé selon l'une des revendications 1 à 8, dans lequel la détection de données du premier type est effectuée sur la base de la valeur de champs étiquette contenus dans le message de réponse (REP).

10. Procédé selon l'une des revendications 1 à 9, dans lequel l'analyse du contenu du message de réponse (REP) comprend une étape de vérification que la longueur d'un champ de donnée du message de réponse correspond à la valeur d'un champ longueur contenu dans le message de réponse.

11. Procédé selon l'une des revendications 1 à 9, dans lequel le contrôleur de routage comprend un circuit d'interface de communication NFC (Near Field Communication), le procédé comprenant une étape d'analyse du message de commande (CMD) par le contrôleur de routage (NFCC) pour déterminer un protocole de transaction ou un format de données (PRT) échangées entre le processeur non sécurisé (MPU) et le processeur sécurisé (CI), le protocole de transaction ou le format de donnée ainsi déterminé étant utilisé pour rechercher des données du premier type dans le message de réponse (REP).

12. Système de transaction comprenant un processeur non sécurisé (MPU) et un contrôleur de routage (NFCC, NFCC1, NFCC2) en communication avec un processeur sécurisé (SE1, CI), directement ou par l'intermédiaire d'une liaison non sécurisée (RL) de type à champ proche,
**caractérisé en ce qu'**il est configuré pour mettre en oeuvre le procédé selon l'une des revendications 1 à 11, le contrôleur de routage étant configuré pour :
analyser le contenu d'un message de réponse (REP) émis par le processeur sécurisé (CI, SE1) et destiné au processeur non sécurisé (MPU) ou destiné à être transmis par une liaison non sécurisée (RL), en réponse à un message de commande (CMD) transmis par le contrôleur de routage au processeur sécurisé, pour y détecter des données d'un premier type, et
si des données du premier type sont détectées, générer un message modifié (REP') en supprimant ou en chiffrant dans le message de réponse, au moins une partie des données détectées, le message modifié étant transmis par le contrôleur de routage en remplacement du message de réponse.

13. Système de transaction selon la revendication 12, dans lequel le processeur sécurisé (CI, SE1) est intégré dans une carte à circuit intégré comportant une interface de communication à champ proche (CCLI) en communication NFC avec le contrôleur de routage (NFCC, NFCC1, NFCC2), ou est connecté au contrôleur de routage (NFCC1, NFCC2).

14. Système de transaction selon la revendication 12 ou 13, dans lequel le contrôleur de routage (NFCC1) est associé à un processeur sécurisé (SE1) et est configuré pour :
dans un mode de fonctionnement protégé, transmettre au processeur sécurisé tous les messages de réponse (REP) qu'il reçoit, et
dans un mode de fonctionnement non protégé, transmettre au processeur sécurisé les messages de réponse contenant des données du premier type, et transmettre directement au processeur non sécurisé (MPU) les messages de réponse ne contenant pas de données du premier type,
le processeur sécurisé étant configuré pour chiffrer les messages reçus avant de les transmettre au processeur non sécurisé (MPU).

15. Système de transaction selon la revendication 12 ou 13, dans lequel le contrôleur de routage (NFCC1) est associé à un processeur sécurisé (SE1) configuré pour :
recevoir du contrôleur de routage des données du premier type extraites des messages de réponse reçus (REP) par le contrôleur de routage,
chiffrer les données du premier type reçues, et
transmettre les données chiffrées au contrôleur de routage, le contrôleur de routage étant configuré pour remplacer les données du premier type par les données chiffrées reçues dans le message de réponse, et pour transmettre le message de réponse ainsi modifié au processeur non sécurisé (MPU).

## Patentansprüche

1. Transaktionsverfahren zwischen einem sicheren Prozessor (Cl, SE1) und einem Transaktionsserver (TSRV) mithilfe eines nicht sicheren Prozessors (MPU) oder einer ungesicherten Verbindung (RL) vom Nahfeldtyp, die mit einem Routing-Controller (NFCC, NFCC1, NFCC2) verbunden sind, wobei das Verfahren Schritte umfasst, bestehend aus:
Senden einer von dem nicht sicheren Prozessor oder der ungesicherten Verbindung gesendeten Befehlsnachricht (CMD) durch den Routing-Controller an den sicheren Prozessor,
Empfangen einer von dem sicheren Prozessor gesendeten Antwortnachricht (REP) durch den Routing-Controller,
Senden der Antwortnachricht an den nicht sicheren Prozessor durch den Routing-Controller oder die ungesicherte Verbindung,
**dadurch gekennzeichnet, dass** es Schritte umfasst, bestehend aus:
Analysieren des Inhalts der Antwortnachricht (REP) durch den Routing-Controller (NFCC, NFCC1, NFCC2), um darin Daten eines ersten Typs zu erfassen und
wenn Daten des ersten Typs erfasst werden, Erzeugen einer modifizierten Nachricht (REP') durch Löschen oder Verschlüsseln in der Antwortnachricht von mindestens einem Teil der erfassten Daten, wobei die modifizierte Nachricht von dem Routing-Controller als Ersatz für die Antwortnachricht gesendet wird.

2. Verfahren nach Anspruch 1, wobei der Routing-Controller (NFCC2) alle empfangenen Antwortnachrichten (REP) weiterleitet, indem er ihren Inhalt systematisch analysiert, und alle Befehlsnachrichten (CMD) weiterleitet, ohne ihren Inhalt zu analysieren.

3. Verfahren nach Anspruch 1, umfassend Schritte zur Analyse der Befehlsnachricht (CMD) durch den Routing-Controller (NFCC, NFCC1) und zur Aktivierung der Analyse des Inhalts von Antwortnachrichten (REP), wenn die Analyse der Befehlsnachricht das Vorliegen von Daten des ersten Typs in einer entsprechenden späteren Antwortnachricht meldet.

4. Verfahren nach Anspruch 2 oder 3, das Schritte umfasst, bestehend aus:
Ermitteln für jede von dem Routing-Controller (NFCC, NFCC1) empfangene Befehlsnachricht (CMD), ob er das Vorliegen von Daten des ersten Typs in der entsprechenden Antwortnachricht (REP) meldet, und
Aktivieren oder Deaktivieren der Analyse des Inhalts der entsprechenden Antwortnachricht, wobei die Befehlsnachricht das Vorhandensein von Daten des ersten Typs in der entsprechenden Antwortnachricht meldet oder nicht.

5. Verfahren nach einem der Ansprüche 1 bis 4, wobei der Routing-Controller (NFCC, NFCC1) durch Verschlüsselung mindestens einen Teil der Daten des ersten Typs, die in der Antwortnachricht (REP) erfasst werden, modifiziert, eine modifizierte Antwortnachricht (REP') durch Ersetzen der erfassten Daten des ersten Typs durch die in der Antwortnachricht modifizierten Daten erzeugt und die modifizierte Antwortnachricht an den nicht sicheren Prozessor (MPU) sendet.

6. Verfahren nach Anspruch 5, wobei die Modifikation der in der Antwortnachricht (REP) erfassten Daten des ersten Typs Schritte zum Senden der erfassten Daten an einen sicheren Prozessor (SE1), der mit dem Routing-Controller (NFCC1) verbunden ist, zur Generierung von modifizierten Daten durch den sicheren Prozessor durch Verschlüsselung von mindestens einem Teil der ausgelesenen Daten und zum Senden der modifizierten Daten durch den sicheren Prozessor an den Routing-Controller umfasst, wobei der nicht sichere Prozessor (MPU) die modifizierte Antwortnachricht (REP') an einen Zwischenserver (GSRV) mit einer Schlüsselkennung sendet, mit dem der Zwischenserver einen Entschlüsselungsschlüssel ermitteln kann, wobei der Zwischenserver die in der modifizierten Antwortnachricht verschlüsselten Daten entschlüsselt, und die ursprüngliche Antwortnachricht wiederherstellt, indem die verschlüsselten Daten in der modifizierten Antwortnachricht durch die entschlüsselten Daten ersetzt werden, wobei die wiederhergestellte Antwortnachricht an einen Transaktionsserver (TSRV) gesendet wird.

7. Verfahren nach einem der Ansprüche 1 bis 4, wobei wenn die Daten des ersten Typs in der Antwortnachricht (REP) erfasst wurden, der Routing-Controller (NFCC1) die Antwortnachricht an einen sicheren Prozessor (SE, SE1) sendet, der mit dem Routing-Controller und dem nicht sicheren Prozessor (MPU) verbunden ist, wobei der sichere Prozessor dem nicht sicheren Prozessor die Antwortnachricht in verschlüsselter Form sendet.

8. Verfahren nach einem der Ansprüche 1 bis 7, wobei die von dem Routing-Controller (NFCC2) durchgeführte Analyse des Inhalts von Nachrichten (CMD, REP) nur dann erfolgt, wenn eine Betriebsmodusanzeige (SK) des Routing-Controllers signalisiert, dass sich der Routing-Controller in einem nicht geschützten Modus befindet.

9. Verfahren nach einem der Ansprüche 1 bis 8, wobei die Erfassung von Daten des ersten Typs auf Basis des Werts von in der Antwortnachricht (REP) enthaltenen Beschriftungsfeldern erfolgt.

10. Verfahren nach einem der Ansprüche 1 bis 9, wobei die Analyse des Inhalts der Antwortnachricht (REP) einen Schritt der Verifizierung umfasst, dass die Länge eines Datenfeldes der Antwortnachricht dem Wert einer in der Antwortnachricht enthaltenen Feldlänge entspricht.

11. Verfahren nach einem der Ansprüche 1 bis 9, wobei der Routing-Controller eine Nahfeldkommunikation-(Near Field Communication, NFC)-Schnittstellenschaltung umfasst, wobei das Verfahren einen Schritt der Analyse der Befehlsnachricht (CMD) durch den Routing-Controller (NFCC) umfasst, um ein Transaktionsprotokoll oder ein Format von zwischen dem nicht sicheren Prozessor (MPU) und dem sicheren Prozessor (Cl) ausgetauschten Daten (PRT) zu ermitteln, wobei das so ermittelte Transaktionsprotokoll oder das Datenformat verwendet wird, um Daten des ersten Typs in der Antwortnachricht (REP) zu suchen.

12. Transaktionssystem, umfassend einen nicht sicheren Prozessor (MPU) und einen Routing-Controller (NFCC, NFCC1, NFCC2) in Kommunikation mit einem sicheren Prozessor (SE1, Cl), direkt oder mittels einer ungesicherten Verbindung (RL) vom Nahfeldtyp,
**dadurch gekennzeichnet, dass** es konfiguriert ist, um das Verfahren nach einem der Ansprüche 1 bis 11 auszuführen, wobei der Routing-Controller konfiguriert ist, um:
den Inhalt einer Antwortnachricht (REP) zu analysieren, die von dem sicheren Prozessor (Cl, SE1) gesendet wird und für den nicht sicheren Prozessor (MPU) bestimmt ist oder dazu bestimmt ist, von einer nicht gesicherten Verbindung (RL) als Antwort auf eine Befehlsnachricht (CMD) gesendet zu werden, die von dem Routing-Controller an den sicheren Prozessor gesendet wird, um dort Daten eines ersten Typs zu erfassen, und
wenn Daten des ersten Typs erfasst werden, eine modifizierte Nachricht (REP') zu erzeugen, indem in der Antwortnachricht mindestens ein Teil der erfassten Daten gelöscht oder verschlüsselt wird, wobei die modifizierte Nachricht von dem Routing-Controller als Ersatz für die Antwortnachricht gesendet wird.

13. Transaktionssystem nach Anspruch 12, wobei der sichere Prozessor (Cl, SE1) in einer Karte mit integriertem Schaltkreis integriert ist, die eine Nahfeldkommunikationsschnittstelle (CCLI) in NFC-Kommunikation mit dem Routing-Controller (NFCC, NFCC1, NFCC2) aufweist oder mit dem Routing-Controller (NFCC1, NFCC2) verbunden ist.

14. Transaktionssystem nach Anspruch 12 oder 13, wobei der Routing-Controller (NFCC1) einem sicheren Prozessor (SE1) zugeordnet ist und konfiguriert ist, um:
in einem geschützten Betriebsmodus alle Antwortnachrichten (REP), die er empfängt, an den sicheren Prozessor zu senden, und
in einem nicht geschützten Betriebsmodus die Antwortnachrichten, die Daten des ersten Typs enthalten, an den sicheren Prozessor zu senden und die Antwortnachrichten, die keine Daten des ersten Typs enthalten, direkt an den nicht sicheren Prozessor (MPU) zu senden,
wobei der sichere Prozessor konfiguriert ist, um die empfangenen Nachrichten zu verschlüsseln, bevor er sie an den nicht sicheren Prozessor (MPU) sendet.

15. Transaktionssystem nach Anspruch 12 oder 13, wobei der Routing-Controller (NFCC1) einem sicheren Prozessor (SE1) zugeordnet ist, der konfiguriert ist, um:
von dem Routing-Controller aus den von dem Routing-Controller empfangenen Antwortnachrichten (REP) ausgelesene Daten des ersten Typs zu empfangen,
die empfangenen Daten des ersten Typs zu verschlüsseln und
die verschlüsselten Daten an den Routing-Controller zu senden, wobei der Routing-Controller konfiguriert ist, um die Daten des ersten Typs durch die in der Antwortnachricht empfangenen verschlüsselten Daten zu ersetzen und um die so modifizierte Antwortnachricht an den nicht sicheren Prozessor (MPU) zu senden.

## Claims

1. Method for carrying out a transaction between a secure processor (CI, SE1) and a transaction server (TSRV) via a non-secure processor (MPU) or a non-secure link (RL) of the near-field type, which secure processor and transaction server are connected to a routing controller (NFCC, NFCC1, NFCC2), the method comprising the steps of:
the routing controller transmitting a control message (CMD), emitted by the non-secure processor or by the non-secure link, to the secure processor,
the routing controller receiving a response message (REP) emitted by the secure processor, and
the routing controller transmitting the response message to the non-secure processor or via the non-secure link,
**characterized in that** said method comprises the steps of:
the routing controller (NFCC, NFCC1, NFCC2) analyzing the content of the response message (REP) in order to detect therein data of a first type, and,
if data of the first type are detected, generating a modified message (REP') by deleting or encrypting, in the response message, at least a portion of the detected data, the modified message being transmitted by the routing controller in place of the response message.

2. Method according to claim 1, wherein the routing controller (NFCC2) retransmits all the response messages (REP) received, while systematically analyzing the content thereof, and retransmits all the control messages (CMD) without analyzing the content thereof.

3. Method according to claim 1, comprising the steps of the routing controller (NFCC, NFCC1) analyzing the control message (CMD), and the analysis of the content of the response messages (REP) being activated if the analysis of the control message indicates the presence of data of the first type in a subsequent corresponding response message.

4. Method according to either claim 2 or claim 3, comprising the steps of:
determining, for each control message (CMD) received by the routing controller (NFCC, NFCC1), whether said message indicates the presence of data of the first type in the corresponding response message (REP), and
activating or deactivating the analysis of the content of the corresponding response message depending on whether or not the control message indicates the presence of data of the first type in the corresponding response message.

5. Method according to any of claims 1 to 4, wherein the routing controller (NFCC, NFCC1) modifies, by encryption, at least a portion of the data of the first type detected in the response message (REP), generates a modified response message (REP') by replacing the detected data of the first type with the modified data, in the response message, and transmits the modified response message to the non-secure processor (MPU).

6. Method according to claim 5, wherein the modification of the data of the first type detected in the response message (REP) comprises the steps of transmitting detected data to a secure processor (SE1) connected to the routing controller (NFCC1), the secure processor generating modified data by encrypting at least a portion of the data retrieved, and the secure processor transmitting modified data to the routing controller, the non-secure processor (MPU) transmitting the modified response message (REP') to an intermediate server (GSRV) together with a key identifier that allows the intermediate server to determine a decryption key, the intermediate server decrypting the encrypted data in the modified response message and recreating the original response message by replacing, in the modified response message, the encrypted data with the decrypted data, the recreated response message being transmitted to a transaction server (TSRV).

7. Method according to any of claims 1 to 4, wherein, when data of the first type have been detected in the response message (REP), the routing controller (NFCC1) transmits the response message to a secure processor (SE, SE1) that is connected to the routing controller and to the non-secure processor (MPU), the secure processor transmitting the response message, in encrypted form, to the non-secure processor.

8. Method according to any of claims 1 to 7, wherein the analysis of the content of the messages (CMD, REP) implemented by the routing controller (NFCC2) is carried out only if an operating mode indicator (SK) of the routing controller signals that the routing controller is in an unprotected mode.

9. Method according to any of claims 1 to 8, wherein the detection of data of the first type is carried out on the basis of the tag field value contained in the response message (REP).

10. Method according to any of claims 1 to 9, wherein the analysis of the content of the response message (REP) comprises a step of verifying that the length of a data field of the response message corresponds to a length field value contained in the response message.

11. Method according to any of claims 1 to 9, wherein the routing controller comprises an NFC (Near Field Communication) interface circuit, the method comprising a step of the routing controller (NFCC) analyzing the control message (CMD) in order to determine a transaction protocol or a data format (PRT) exchanged between the non-secure processor (MPU) and the secure processor (CI), the transaction protocol or the data format thus determined being used to search for data of the first type in the response message (REP).

12. Transaction system comprising a non-secure processor (MPU) and a routing controller (NFCC, NFCC1, NFCC2) that communicates, directly or via a non-secure link (RL) of the near-field type, with a secure processor (SE1, CI),
**characterized in that** said system is configured to implement the method according to any of claims 1 to 11, the routing controller being configured to:
analyze the content of a response message (REP), emitted by the secure processor (CI, SE1) and intended for the non-secure processor (MPU) or intended to be transmitted via a non-secure link (RL), in response to a control message (CMD) transmitted by the routing controller to the secure processor, in order to detect therein data of a first type, and,
if data of the first type are detected, to generate a modified message (REP') by deleting or encrypting, in the response message, at least a portion of the detected data, the modified message being transmitted by the routing controller in place of the response message.

13. Transaction system according to claim 12, wherein the secure processor (CI, SE1) is integrated in an integrated circuit card comprising a near field communication interface (CCLI) that is in near field communication with the routing controller (NFCC, NFCC1, NFCC2) or is connected to the routing controller (NFCC1, NFCC2).

14. Transaction system according to either claim 12 or claim 13, wherein the routing controller (NFCC1) is associated with a secure processor (SE1) and is configured to:
transmit to the secure processor, in a protected operating mode, all the response messages (REP) that it receives, and,
in an unprotected operating mode, to transmit to the secure processor the response messages containing data of the first type, and to transmit directly to the non-secure processor (MPU) the response messages that do not contain data of the first type,
the secure processor being configured to encrypt the received messages before transmitting said messages to the non-secure processor (MPU).

15. Transaction system according to either claim 12 or claim 13, wherein the routing controller (NFCC1) is associated with a secure processor (SE1) configured to:
receive, from the routing controller, data of the first type retrieved from the response messages (REP) received by the routing controller,
encrypt the received data of the first type, and
transmit the encrypted data to the routing controller, the routing controller being configured to replace the data of the first type with the received encrypted data, in the response message, and to transmit the response message thus modified to the non-secure processor (MPU).
